# EUROPÄISCHE PATENTANMELDUNG

(11) **EP 2 113 167 A2**
(43) Veröffentlichungstag der Anmeldung: **04.11.2009**
(21) Anmeldenummer: 09005689.6
(22) Anmeldetag: 23.04.2009
(51) Int. Cl.: A01G 17/06, A01G 9/12

(54) **Rankelementesystem**

(30) Priorität: 28.04.2008 DE 102008021214; 28.04.2008 DE 202008005878 U
(71) Anmelder: Horst Howest GmbH, 48268 Greven (DE)
(72) Erfinder: Howest, Carsten, 48268 Greven (DE)
(74) Vertreter: Triebold, Klaus-Jörg

(57) **Zusammenfassung**

1. Rankelementesystem für Rankpflanzen und Rankgemüse
2.1 Rankgitter / Rankspaliere nach dem Stand der Technik bestehen entweder aus einem Stück oder werden aus einzelnen Stäben und Teilen zusammengesetzt. Sie passen daher nur für bestimmte Anwendungsfälle oder müssen aus einzelnen Streben auf einem tragenden Untergrund zusammengesetzt werden.
2.2 Das erfindungsgemäße System bietet hingegen die Möglichkeit wie mit einem Baukasten beliebige flächige Formen aber auch freistehende Körper zusammenzustellen, die den jeweiligen Erfordernissen aber auch geschmacklichen Gesichtspunkten vielfältig angepasst werden können.

Dazu lassen sich plattenförmige aber auch halbrunde Elemente durch eine systemkonforme Verbindung miteinander verbinden. Diese können unterschiedlichste Formen und Größen aufweisen, so dass im Ergebnis verschiedenste Gebilde entstehen können.

## Beschreibung

Die Erfindung betrifft ein System zueinander passender und miteinander verbindbarer Rankelemente, die in unterschiedlichen Formen und Größen ausgestaltet sind und durch die gleichartige Art ihrer Verbindung, durch Haken und Ösen, miteinander zu beliebigen Formen kombiniert werden können.

Der Technik seit langem bekannt und im Handel erhältlich sind Rankhilfen in Form von Gittern und Spalieren an denen sich Rankpflanzen und Rankgemüse empor ranken können. Diese sind in Form von einfachen planen Gitterplatten handelsüblich, aber auch als halbschalenförmig gebogene Gitter, zB. zur Umrundung von Regenrinnenfallrohren der Technik bekannt. So beschreiben DE 20 2004 004 411 und DE 20 2005 009 104 für letzteren Fall einfache halbschalenförmig gebogene Gitter. Anderseits gibt es Systeme bei denen aus einzelnen Baustücken, wie. zB. einzelnen Stäben, Streben, Drähten, Befestigungsstücken usw. Spaliere und Gitter aus diesen Einzelteilen zusammengesetzt werden können. DE 35 31 515 und EP 0 371 337 beschreiben solche Systeme bei denen auf einer tragenden Grundfläche, in der Regel einer Gebäudewand, aus Einzelteilen Rankspaliere aufgebaut werden. Schließlich gibt es im Handel einzelne Stützen, Stäbe oder Gitter in verschiedenen Formen, die freistehend ins Erdreich eingebracht werden und als Rankhilfe dienen, bis hin zu der von Alters her bekannten klassischen Bohnenstange.

Nachteilig bei den vorstehenden Rankhilfen nach dem Stand der Technik ist, dass sie entweder nur aus einem einzelnem Element zur Umrankung eines bestimmten Bauteils dienen oder aber aus einzelnen Baustücken bestehen und einen tragenden Untergrund benötigen. Die frei stehenden Rankhilfen wiederum haben zumeist nur eine bestimmte Form für einen einzige Einsatzart bei bestimmten Pflanzen.

Ausgehend vom bisherigen Stand der Technik ist Aufgabe der vorliegenden Erfindung, ein System zu schaffen bei dem in Form und Größe weitgehend beliebige Rankhilfen und Spaliere, die den Anforderungen damit flexibel anpassbar sind, vom Anwender nach seinen Wünschen selber zusammen gesteckt werden können. In Form und Größe gleiche aber auch verschiedene Elemente können dabei wie in einem Baukastensystem zu einem Ganzen zusammengefügt werden. Dabei können durch die Kombination gleicher aber auch unterschiedlicher Elemente beliebige neue Formen zusammengestellt und damit die unterschiedlichsten Einsatzfälle und geschmackliche Anforderungen abgedeckt werden. So können damit sowohl freistehende als auch auf einer Wand montierbare Rankhilfen oder beides miteinander kombiniert werden. Durch Kombination von halbrunden und/oder planen Elementen lassen sich abgerundete aber auch eckige Umrandungen für beliebige Zwecke erstellen. Die neuen Formen können dabei örtlichen Gegebenheiten, als auch geschmacklichen Aspekten flexibel angepasst werden.

Das erfindungsgemäße Rankelementesystem besteht aus Gitterelementen, die als plane Gitterplatten aber auch in gebogener, halbschalenförmiger Ausführung verfügbar sind. Die Elemente werden in mehreren verschiedenen Höhen und Breiten gefertigt, um wie bei einem Baukastensystem unterschiedliche Endformen erreichen zu können.

Die Querstäbe der Gitterelemente sind in gleichen Abständen an einem Ende zu einem Haken und am anderen Ende zu einer Öse gebogen. Damit lassen sich zwei Elemente miteinander auf einfache aber stabile Art miteinander verbinden, woran sich dann kettenartig weitere Elemente aneinanderreihen lassen. Wird das erste mit dem letzten Element verbunden, lassen sich auch geschlossene Körper und Formen schaffen.

Ein Ausführungsbeispiel der Erfindung und verschiedene Kombinationen damit sind in den Zeichnungen dargestellt und im Folgenden näher beschrieben.

Die Abbildungen zeigen:

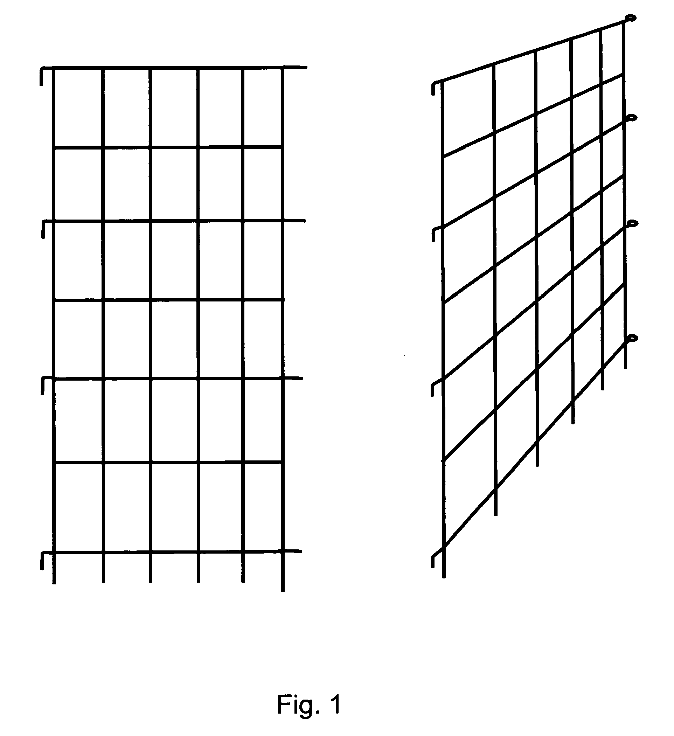

- Fig. 1: Plattenförmige Elemente in der Aufsicht und in perspektivischer Ansicht

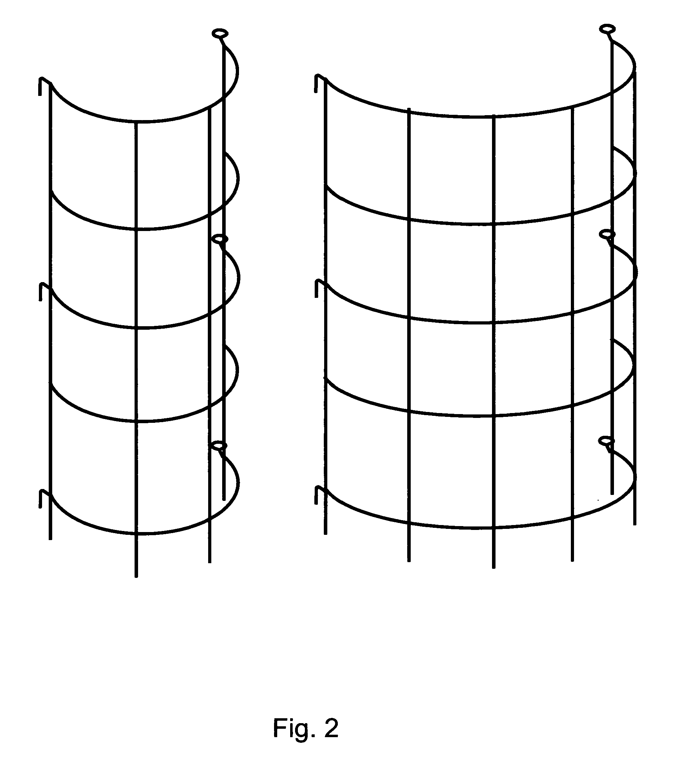

- Fig. 2: Halbzylindrige Elemente in verschiedenen Breiten/Halbmessern.

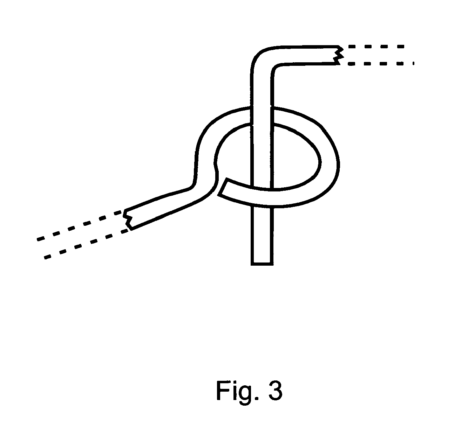

- Fig. 3: Verbindung mit Hake und Ösen in Detailansicht

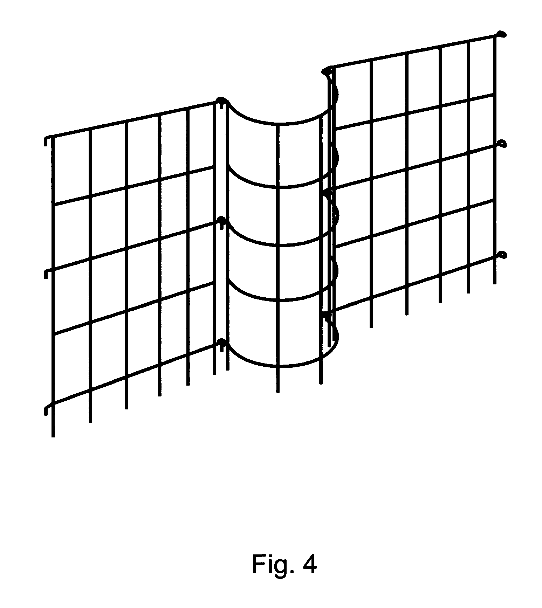

- Fig. 4: Systemkombination aus plattenförmigen- und halbzylindrigen Elementen

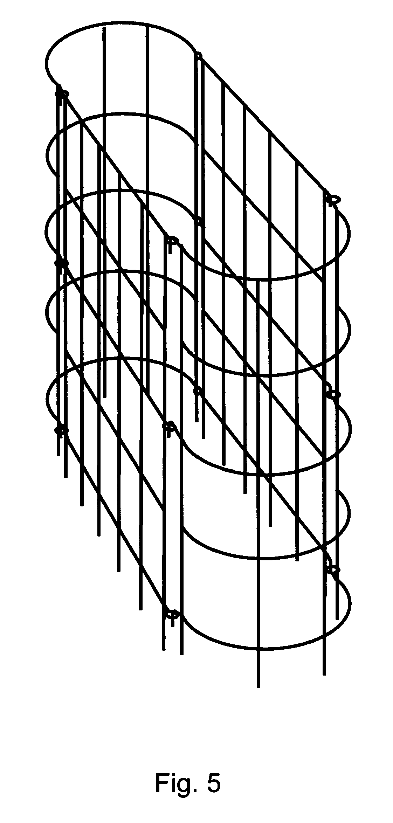

- Fig. 5: Freistehende Form aus plattenförmigen- und halbzylindrigen Elementen

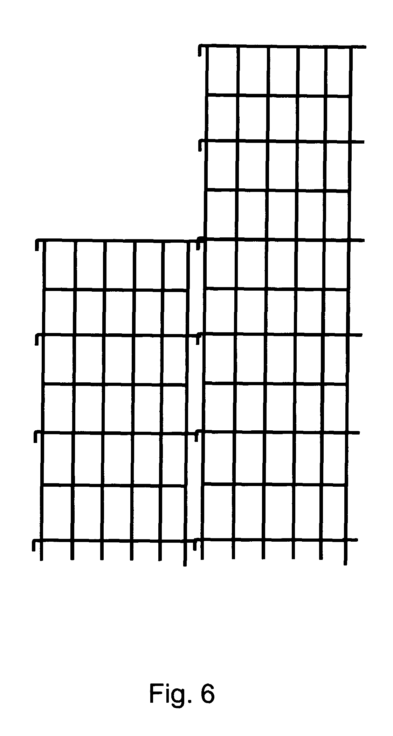

- Fig. 6: Kombination aus unterschiedlich großen Platten

Das System besteht aus Elementen gleicher Ausführungsart aber unterschiedlicher Form- und Größengestaltung (1, 2). Wie mit einem Baukasten lassen sich damit beliebige Rankhilfen und Rankspaliere als flächige Formen aber auch als freistehende Körper zusammenstecken (4, 5, 6). Grundsätzlich bestehen die Elemente aus einer rechtwinkligen Gitterstruktur (1, 2), die aus wetterfestem stabförmigen Material gebildet wird. Die quer verlaufenden Stäbe sind in bestimmten Abständen an einem Ende zu einem Haken abgebogen und am anderen zu einer Öse geformt (3). Auf diese Weise lassen sich die Elemente miteinander zusammenstecken und zu flächigen aber auch zu freistehenden Körpern miteinander verbinden (4, 5, 6). Durch die Ausprägung als System mit zueinander passenden Elementen, lassen sich auf Elemente unterschiedlicher Größe kombinierten (6), so dass auch verschieden Anforderungen an das zusammengestellte Spalier erfüllt werden können.

## Patentansprüche

1. Rankelementesystem als Rankhilfe für Rankpflanzen und Rankengemüse
**dadurch gekennzeichnet,**
**dass** das Rankelementesystem aus durch Haken und Ösen (3) miteinander verzahnbaren gitterförmigen Rankelementen verschiedener Formgestaltung (1, 2) und Breite und Höhe (6) besteht, die zu mehreren zu einer variabel gestaltbaren Rankhilfe oder einem Rankspalier (4, 5) für Pflanzen zusammengefügt werden.

2. Rankelementesystem nach Anspruch 1
**dadurch gekennzeichnet,**
**dass** die einzelnen Rankelemente
- aus rechtwinklig miteinander verbundenen parallelen Stäben bestehen, die **dadurch** ein Gitter bilden (1, 2), wobei in bestimmten regelmäßigen Abständen die quer verlaufenden Stäbe an einem Ende zu einem Haken rechtwinklig abgebogen sind und am anderen Ende zu einer ringförmigen Öse geformt sind (3);
- durch Einhaken der hakenförmigen Enden eines Elements in die ösenförmigen Enden (3) des nächsten Elements diese zu zweien und zu mehreren kettenartig zu flächigen oder zu geschlossenen Formen miteinander verbunden werden (4, 5, 6).

3. Rankelementesystem nach einem der Ansprüche 1 bis 2
**dadurch gekennzeichnet,**
**dass** die Rankelemente plan und plattenförmig oder in ihrer Längsachse halbzylindrig und halbschalenförmig mit unterschiedlichen Durchmessern und Biegeradien gebogen sind (2).

4. Rankelementesystem nach einem der Ansprüche 1 bis 3
**dadurch gekennzeichnet,**
**dass** die mit Haken und Ösen der verbindbaren Querstäbe von Rankelementen unterschiedlicher Form und Abmessungen sich auf gleicher Höhe befinden und **dadurch** unterschiedliche Elemente in einem System miteinander verzahnt werden können (6).

5. Rankelementesystem nach einem der Ansprüche 1 bis 4
**dadurch gekennzeichnet,**
**dass** die Rankelemente aus witterungsbeständigen Metall- oder Kunststoffstäben bestehen.
